# EUROPEAN PATENT APPLICATION

(11) **EP 0 645 324 A1**
(43) Date of publication of application: **29.03.1995**
(21) Application number: 94202788.9
(22) Date of filing: 27.09.1994
(51) Int. Cl.: B65G 47/49, G07C 3/00, A22B 7/00, B23Q 41/02

(54) **Method for identifying products or product carriers in a production process and an identification system for carrying out such a method**

(30) Priority: 28.09.1993 NL 9301665
(71) Applicant: N.V. Nederlandsche Apparatenfabriek NEDAP, NL-7141 DE Groenlo (NL)
(72) Inventor: Smits, Eric Theodorus E.M., NL-7003 CX Doetinchem (NL); te Braake, Theodorus G.J., NL-7141 VZ Groenlo (NL)
(74) Representative: Smulders, Theodorus A.H.J., Ir.

(57) **Abstract**

The invention relates to an identification system with label exchanger for identifying products or product carriers in an automated production process. The identification labels are automatically removed from the products or from the product carriers at the end of the production process. Then these identification labels are transferred to the beginning of the production process through a label transport system. This transport takes place by means of compressed air or vacuum, the labels being blown or sucked through a tube. At the beginning of the production process, the labels are automatically attached to the products or the product carriers. Defective labels can be removed during this transport.

## Description

This invention relates to a method for identifying products or product carriers in an at least partly automated production process.

The invention also relates to an identification system comprising identification labels for identifying products or product carriers in an at least partly automated production process.

The invention is particularly important if the product carriers referred to are also used outside the production or operating process. As an example, the identification of slaughter hooks in slaughterhouses can be mentioned. The slaughter hooks which are used for this purpose are standardized with regard to their design and dimensions and circulate between the distributors of slaughter products and the slaughterhouses. For the purpose of the identification, these slaughter hooks can be provided with a contactless identification label, such as, for instance, according to applicant's U.S. Patent No. 4,196,418.

If these slaughter hooks are to be identified in the slaughterhouse by means of this contactless identification label in order to automate the slaughter process, comparatively speaking most identification labels are located outside the slaughterhouses.

This requires a considerable investment and it is not very profitable.

The present invention provides a solution to this problem and can also be used in all similar automation situations where the product carrier and/or products circulate between the supplier and the processer.

A method according to the invention is characterized in that in a first section of the production process products or product carriers are automatically provided with identification labels; in a second section of the production process, located downstream of the first section, identification labels are automatically removed from the products or product carriers; and at least some of the removed identification labels are transported to another section of the production process, where they can be attached to products or product carriers again.

According to a variant of the invention, now only a limited number of the product carriers in circulation need to be provided with identification labels, viz. those product carriers which are located in the production process.

In accordance with another aspect of the invention, not any product carrier needs to be provided with an identification label since the products themselves are provided with such a label. However, both variants entail a comparable saving on the numbers of identification labels. The method can also be used in production processes where no product carriers are used. The above-mentioned other section of the production process need not always be the same as the above-mentioned first section of the production process. In a slaughterhouse, the identification labels which are used in a first production line of the production process can, for instance after being removed, be used again in a second production line of the production process. It is also possible to return the labels to another section of the first production line.

According to another aspect of the invention, at least some of the removed identification labels are returned to the first section, where they can be attached to products or product carriers again.

In particular, the removed identification labels are tested before being attached to a product or product carrier again. The identification labels which the test shows to be defective are not attached to a product or product carrier again.

According to a highly practical embodiment of the invention, the identification labels are provided with magnets to temporarily attach the identification labels to the products or product carriers.

According to another practical embodiment of the invention, the above-mentioned transport of the removed identification labels is carried out by means of a tube, through which the identification labels are blown from one end to the other by means of compressed air or sucked from one end to the other by means of vacuum. The transport of the labels can also be carried out manually. The attachment and removal of labels typically requires a high speed and is preferably carried out automatically. More particularly, identification labels which have been removed from products or product carriers are stored in a buffer before being attached again to products or product carriers in the production process.

Generally, the identification labels will comprise contactless electromagnetic responders. Further, in particular the first section will be located at the beginning of the production process. Similarly, in particular the second section will be located at the end of the production process.

French patent application 2,588,987 discloses a production process utilizing a product carrier comprising a label. However, the production carrier constitutes a fixed part of the production process, so that the labels in the production process are not fitted to be subsequently removed again.

International patent application WO 93/03985 discloses a production process where articles of clothing hanging on a coat-hanger are transported. During the process, the articles of clothing are suspended from intermediate hangers, which are provided with a code. However, the intermediate hangers constitute a fixed part of the production process and therefore cannot circulate between the supplier and processer. Further, the code is fixedly provided and is therefore not removed from the intermediate hook each time.

An identification system according to the invention is characterized in that the system further comprises a label fitting mechanism for attaching identification labels to products or product carriers in a first section of the production process, a label detachment mechanism for removing identification labels from the products or product carriers in a second section of the production process, located downstream of the first section, and a transport mechanism for returning at least some of the removed identification labels to another section of the production process, where they can be attached to products or product carriers again.

The invention will be further explained with reference to the drawing. In the drawing:
Fig. 1 is a diagrammatic representation of an automatic slaughter process, comprising an identification system with a label exchanger according to the invention; and
Fig. 2 is a cross section of an identification label according to the invention.

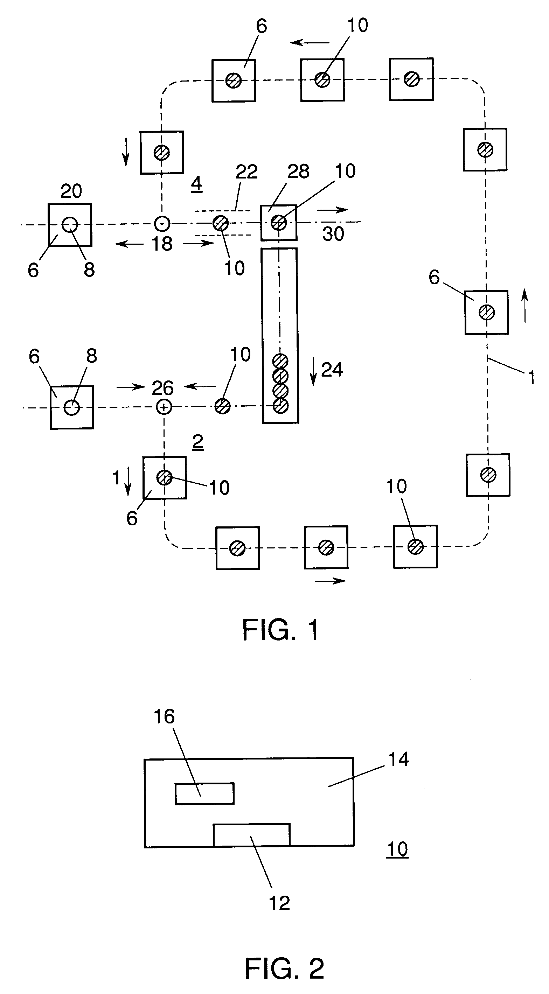

Fig. 1 diagrammatically shows an identification system used in a slaughter process for animals. Fig. 1 also shows a possible embodiment of a method according to the invention. The process comprises a slaughter line 1 with a first section 2, located near the beginning of the slaughter line 1, and a second section 4, located near the end of the slaughter line 1. Along the slaughter line 1, represented by dotted lines in the drawing, transport hooks 6 are transported in the direction of the arrows shown, with the animals being attached to the transport hooks. Each transport hook 6 is provided with a round hole 8 in which an identification label 10 can be fixed. To fix the identification labels in the hole 8, the labels 10 comprise a magnet 12 which is accommodated in a plastic housing 14 of the label 10. Further, the identification label comprises a responder 16, known per se, which generates an identification signal when it is located in an electromagnetic interrogation field. The identification signal can be received and decoded with means known per se. Accordingly, this will not be explained in further detail here.

By virtue of the magnet 12 the identification labels 10 can be readily removed from the slaughter hooks 6, which is carried out at the end of the slaughter line 1 in the second section 4 by means of a detachment mechanism 18. The detachment mechanism is of a type which is known per se and will not be further explained here. The slaughter hooks 6 now leave the slaughterhouse together with the meat 20, without the identification label 10.

The identification labels 10 which have been removed from the transport hook by means of the detachment mechanism 18 are subsequently blown through a plastic tube 22 to the first section, in this case the beginning of the slaughter process 1. Here the identification labels are received in a buffer magazine 24 which can be adjusted in accordance with the amount of hooks 6 which may be under way or are being used in the slaughterhouse. By means of a label fitting mechanism 26 the identification labels 10 are subsequently fitted to the slaughter hooks 6 entering the slaughter process 1. This is carried out at the first section 2 of the slaughter line 1. The label fitting mechanism is of a type which is known per se and will not be further described here.

Any defective labels 10 can be selected to be subsequently removed, to prevent their being attached to a hook 6 again. In the drawing this is shown diagrammatically by a test unit 28 which checks removed labels 10 for defects. If a label 10 is defective, it is removed to a position 30. If a label is not defective, it is supplied to the buffer 24.

By using the above-described identification system with label exchanger, it will suffice to use a much smaller number of labels, which constitutes a considerable saving of investment costs. The same system can, for instance, be used with auction carts or on pallets, where a large part of the carrier stock circulates with suppliers or users. These variants are all understood to fall within the scope of the invention.

## Claims

1. A method for identifying products or product carriers in a production process, characterized in that in a first section of the production process products or product carriers are automatically provided with identification labels; in a second section of the production process, located downstream of the first section, identification labels are automatically removed from the products or product carriers; and at least some of the removed identification labels are transported to another section of the production process, where they can be attached to products or product carriers again.

2. A method according to claim 1, characterized in that at least some of the removed identification labels are returned to the first section, where they can be attached to products or product carriers again.

3. A method according to claim 1 or 2, characterized in that the removed identification labels are tested before being attached to a product or product carrier again.

4. A method according to claim 3, characterized in that identification labels which the test demonstrates to be defective are not attached to a product or product carrier again.

5. A method according to any one of the preceding claims, characterized in that the identification labels comprise magnets to temporarily attach the identification labels to the products or product carriers.

6. A method according to any one of the preceding claims, characterized in that said transport of the removed identification labels is carried out by means of a tube through which the identification labels are blown from one end to the other by means of compressed air or are sucked from one end to the other by means of vacuum.

7. A method according to any one of the preceding claims, characterized in that identification labels which have been removed from products or product carriers are stored in a buffer before being attached to products or product carriers in the production process again.

8. A method according to any one of the preceding claims, characterized in that the identification labels comprise contactless electromagnetic responders.

9. A method according to any one of the preceding claims, characterized in that the first section is located at the beginning of the production process.

10. A method according to any one of the preceding claims, characterized in that the second section is located at the end of the production process.

11. An identification system comprising identification labels for identifying products or product carriers in a production process, characterized in that the system further comprises a label fitting mechanism for attaching identification labels to products or product carriers in a first section of the production process; a label detachment mechanism for removing identification labels from the products or product carriers in a second section of the production process, located downstream of the first section; and a transport mechanism for returning at least some of the removed identification labels to another section of the production process, where they can be attached to products or product carriers again.

12. An identification system according to claim 11, characterized in that the transport mechanism returns at least some of the removed identification labels to the first section, so that they can there be attached to products or product carriers again.

13. An identification system according to claim 11 or 12, characterized in that the system further comprises testing means for testing removed identification labels before they are attached to a product or product carrier again.

14. An identification system according to claim 13, characterized in that the testing means separates from the other labels those identification labels which the test has identified as being defective, so that these defective labels are not returned again to the production process to be attached to products or product carriers.

15. An identification system according to any one of the preceding claims 11-14, characterized in that the identification labels comprise magnets to temporarily attach the identification labels to the products or product carriers.

16. An identification system according to any one of the preceding claims 11-15, characterized in that the transport means at least comprise a tube through which the identification labels are blown from one end to the other by means of compressed air or sucked from one end to the other by vacuum.

17. An identification system according to any one of the preceding claims 11-16, characterized in that the system further comprises a buffer unit in which detection labels which have been removed from products or product carriers are stored in a buffer before being attached to products or product carriers again in the production process.

18. An identification system according to any one of the preceding claims 11-17, characterized in that the first section is located at the beginning of the production process.

19. An identification system according to any one of the preceding claims 11-18, characterized in that the second section is located at the end of the production process.

20. An identification system according to any one of the preceding claims 11-19, characterized in that the indentification labels comprise contactless electromagnetic responders.
